# FASCICULE DE BREVET EUROPEEN

(11) **EP 1 759 333 B1**
(45) Date de publication et mention de la délivrance du brevet: **12.12.2007**
(21) Numéro de dépôt: 05778665.9
(22) Date de dépôt: 22.06.2005
(51) Int. Cl.: G06K 9/00

(54) **DISPOSITIF OPTIQUE DE CAPTURE BIOMETRIQUE PAR CONTACT ET INSTALLATION METTANT EN OEUVRE UN TEL DISPOSITIF**
OPTISCHE VORRICHTUNG ZUR BIOMETRISCHEN ERFASSUNG MITTELS KONTAKT UND SYSTEM MIT DIESER VORRICHTUNG
OPTICAL DEVICE FOR BIOMETRIC CAPTURE BY CONTACT AND SYSTEM USING SAID DEVICE

(30) Priorité: 23.06.2004 FR 0406843
(43) Date de publication de la demande: 07.03.2007
(73) Titulaire: SAGEM Défense Sécurité, 75015 Paris (FR)
(72) Inventeur: ROUGET, Mathieu, Résidence Saint Germain, 78600 Maisons Laffitte (FR); LAMBERT, Laurent, F-75017 Paris (FR); FONDEUR, Jean-Christophe, F-92300 Levallois-Perret (FR)
(74) Mandataire: Gorrée, Jean-Michel
(86) Numéro de dépôt international: PCT/FR2005/001578
(87) Numéro de publication internationale: WO 2006/008396

(56) Documents cités:
- WO-A-01/84477
- US-A- 6 154 285

## Description

La présente invention concerne d'une façon générale le domaine de la capture biométrique par contact, notamment la capture d'empreintes digitales, et elle concerne plus précisément des perfectionnements apportés aux dispositifs optiques de capture biométrique par contact, comprenant :
un élément optique dont une face constitue au moins en partie une surface d'apposition d'un organe dont on souhaite capter une caractéristique biométrique,
une source de rayonnement associée audit élément optique pour éclairer ladite face de l'élément optique, et
des moyens capteurs propres à recueillir du rayonnement provenant de ladite face de l'élément optique.

Dans les dispositifs du genre visés par l'invention, notamment pour la capture d'empreintes digitales, la source de rayonnement (en général en lumière visible) illumine l'organe (par exemple le doigt) : les parties de l'organe en contact avec la face diffusent le rayonnement et le rayonnement diffusé traverse un système optique pour atteindre la surface sensible d'un capteur. Ce type de dispositif fonctionne bien lorsque la face d'apposition de l'organe est propre.

Toutefois, après l'apposition d'un organe tel qu'un doigt, il est assez fréquent qu'il subsiste des traces grasses sur la face. Dans le cas où seul le rayonnement de la source intérieure au dispositif parvient sur la susdite face, ces traces grasses diffusent relativement peu de rayonnement et le système optique est agencé pour que le capteur ne soit pas excité.

Par contre, il peut arriver que le rayonnement d'une source extérieure relativement puissante (soleil, lampe à halogène, ...) parvienne sous incidence sur la face précitée. Dans un tel cas, il peut se faire que les traces grasses présentes sur la face diffusent une relativement grande quantité de lumière qui parvient jusqu'au capteur et excite celui-ci. Le capteur délivre alors une image des traces grasses (image latente). Si ces traces grasses sont suffisantes, l'image latente ainsi obtenue peut reproduire de façon suffisamment nette une caractéristique biométrique (par exemple une empreinte digitale) d'une personne précédemment traitée et il peut en résulter une commande intempestive (détection erronée d'application d'un organe, autorisation erronée, ...).

On connaît diverses solutions qui ont été proposées pour tenter de résoudre le problème posé et tenter d'empêcher le dispositif de fonctionner sur la base d'images latentes.

Ainsi, le document US 2003/0202687 propose de former plusieurs images de l'organe qui sont ensuite comparées entre elles. Une différence détectée entre ces images indique un mouvement de l'organe et laisse supposer la présence d'un organe véritable, tandis que la stricte identité des images caractérisant l'absence de tout mouvement laisse supposer qu'il s'agit d'images latentes. Un inconvénient de cette solution connue réside dans le fait que, si une source de rayonnement extérieur est mobile ou si le système d'acquisition des caractéristiques biométriques est lui-même mobile, les images latentes peuvent évoluer dans le temps et être traitées comme si un organe était en place contre la face.

Le document WO 0184477 concerne un dispositif disposant d'une source de rayonnement interne contrôlable. Si l'on fait l'acquisition d'images avec rayonnement et sans rayonnement, il devient possible de discriminer les images latentes et un organe à traiter. Toutefois, ce dispositif connu présente l'inconvénient d'être inefficace lorsque la source extérieure s'éteint au moment où la source interne est éteinte et, aussi, de mal fonctionner lorsque la source extérieure n'est pas constante (par exemple soleil vu au travers d'un feuillage, lieu de passage, capteur mobile).

Le document WO 9714111 enseigne l'utilisation d'électrodes pour mesurer des changements de propriétés électriques à la surface de l'élément optique afin de détecter la présence d'un organe. Un tel dispositif, conçu en pratique pour détecter des fraudes, nécessite un circuit électronique analogique spécifique ; il est complexe et coûteux.

L'invention a pour but de proposer une solution technique simple qui ne nécessite aucun matériel additionnel complexe, qui soit de faible coût de mise en oeuvre et qui puisse s'appliquer aussi bien à des matériels neufs en fabrication qu'à des matériels déjà existants, pour empêcher un dispositif optique de capture biométrique par contact d'être sensible à des images latentes apparaissant dans certaines conditions d'éclairage extérieur.

A ces fins, selon un premier de ses aspects, l'invention propose un dispositif tel que défini au préambule, notamment, bien que non exclusivement, pour la capture d'empreintes digitales, qui, étant agencé conformément à l'invention, se caractérise en ce que ladite face de l'élément optique est revêtue d'une couche mince définissant un motif et constituée en un matériau tel, en relation avec le matériau constitutif de l'élément optique, que ladite couche soit sensiblement transparente en présence du rayonnement émis par la source de rayonnement lorsqu'un organe est apposé sur ladite face de l'élément optique et à être sensiblement moins transparente en présence d'un -rayonnement parasite extérieur incliné par rapport à ladite face de l'élément optique.

Grâce à cet agencement, le dispositif optique de capture biométrique par contact est rendu relativement insensible à la détection d'image latente.

Pour ce qui est de la formation de la couche mince apposée sur la face de l'élément optique, de nombreuses solutions sont envisageables. C'est ainsi que l'on peut prévoir que la couche soit déposée en surépaisseur selon ledit motif prédéterminé ; ou bien encore que la couche soit constituée avec un indice de transmission variable selon ledit motif prédéterminé.

De plus, on peut concevoir que ladite couche soit déposée directement sur la face de l'élément optique ou bien aussi en variante qu'elle soit formée sur un film transparent continu et que ce soit ce film qui soit déposé sur la face de l'élément optique.

En pratique, l'élément optique peut être un prisme dont la base constitue la susdite face.

Le matériau constitutif de l'élément optique peut couramment être du verre.

Le matériau constitutif de la couche peut être, de façon simple à mettre en oeuvre, un oxyde dénommé ITO (Indium-Tin Oxyd, Oxyde Indium-Etain).

Selon un second de ses aspects, l'invention propose une installation de capture biométrique par contact, comprenant :
- au moins un dispositif optique de capture biométrique par contact tel qu'exposé ci-dessus ;
- des moyens de mémorisation pour tenir en mémoire le motif formé par la couche mince ;
- des moyens de détection pour détecter dans une image reçue par les moyens capteurs, la présence de l'image dudit motif en superposition à une image d'empreintes digitales ; et
- des moyens de discrimination pour rejeter, en tant qu'image latente, une image reçue par le capteur et formée de la superposition de l'image du motif et d'une image d'empreintes digitales.

L'invention sera mieux comprise à la lecture de la description détaillée qui suit de certains exemples préférés de réalisation donnés uniquement à titre d'exemples nullement limitatifs. Dans cette description, on se réfère aux dessins annexés sur lesquels :
- la figure 1A est une représentation schématique d'un dispositif optique de capture biométrique par contact visé par l'invention ;
- la figure 1B est une image d'empreinte digitale détectée par les moyens capteurs du dispositif de la figure 1A dans des conditions normales de fonctionnement ;
- la figure 2A est une représentation schématique du dispositif de la figure 1A dans des conditions anormales de fonctionnement ;
- la figure 2B est une image latente susceptible d'être détectée par les moyens capteurs dans les conditions anormales de fonctionnement montrées à la figure 2A ;
- la figure 3A est une représentation schématique du dispositif optique de la figure 1A agencé conformément à l'invention montré dans les conditions de fonctionnement de la figure 2A ;
- la figure 3B est une représentation schématique du motif apposé sur la face de l'élément optique de la figure 2A conformément à l'invention ;
- les figures 4 et 5 sont des représentations d'images perçues par les moyens capteurs dans diverses conditions de fonctionnement d'un dispositif agencé conformément à l'invention ;
- les figures 6A à 6C illustrent diverses variantes de mise en oeuvre des dispositions de l'invention dans le dispositif de la figure 1A ; et
- la figure 7 est un schéma synoptique simplifié d'une installation de capture biométrique agencée selon l'invention.

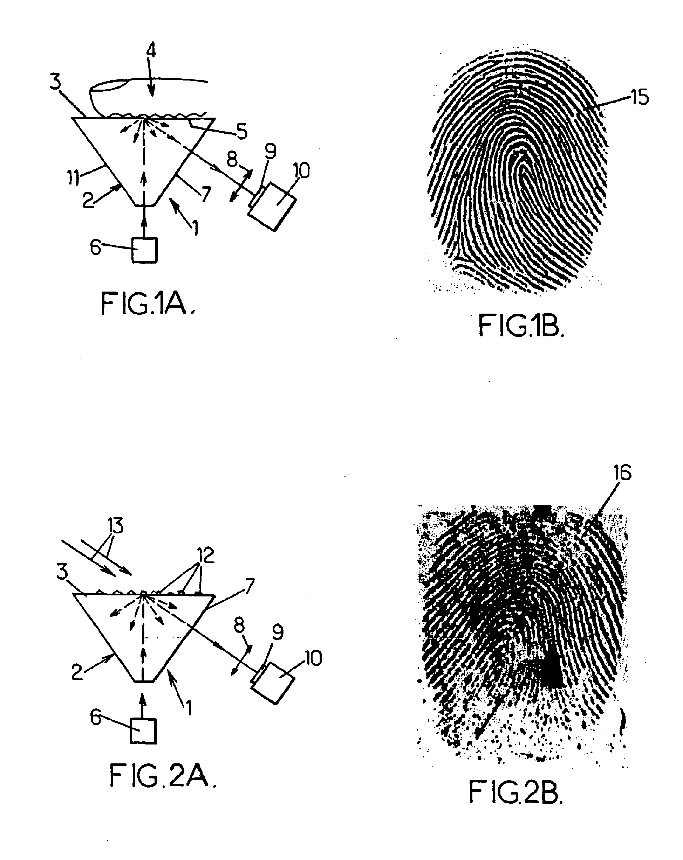

La figure 1A illustre de façon très schématique la structure principale d'un dispositif optique de capture biométrique par contact, lequel dispositif est désigné dans son ensemble par la référence 1. Le dispositif 1 tel qu'illustré comprend un élément optique 2 (constitué ici à titre d'exemple sous forme d'un prisme à section trapézoïdale) dont une face 3 (ici la grande face du prisme) constitue au moins en partie une surface d'apposition d'un organe dont on souhaite capter une caractéristique biométrique.

Pour fixer les idées, car c'est cette application qui est la plus courante bien qu'elle ne soit pas exclusive, le dispositif 1 est supposé destiné à former une image des empreintes digitales 5 d'un doigt 4 qui est apposé sur la face 3 du prisme.

Le dispositif 1 comprend en outre une source de rayonnement 6, en général une source de lumière visible, qui est associée à l'élément optique 2 de manière à éclairer la face 3 précitée. En général, car c'est là la solution la plus simple à mettre en oeuvre, la source de rayonnement 6 éclaire la face 3 à travers l'élément optique 2, comme montré à la figure 1A. Dans l'exemple illustré à la figure 1A, la source de rayonnement 6 est située en regard de la petite face du prisme opposée à la grande face 3 et le rayonnement est dirigé sensiblement perpendiculairement à la face 3 de sorte que le doigt 4 est éclairé de face. En présence d'un doigt, le rayonnement est alors absorbé et réémis par les zones saillantes du doigt dans toutes les directions, notamment en direction du capteur, tandis qu'en regard des sillons des empreintes digitales ou en l'absence de doigt aucun rayonnement n'est perçu par le capteur.

Une partie du rayonnement diffusé à partir de la face 3 sort de l'élément optique par une face latérale 7 et est focalisé par des moyens de focalisation 8 sur des moyens capteurs 9, et ces derniers délivrent ensuite des signaux électriques à destination d'une unité de traitement 10.

Dans les conditions d'éclairage qui sont montrées à la figure 1A, les moyens capteurs 9 reçoivent une image "positive" des empreintes digitales 5 (parties saillantes claires, sillons sombres) comme illustré à la figure 1B lorsqu'un doigt 4 est apposé sur la face 3. Par contre, lorsqu'aucun doigt n'est apposé sur la face 3, le capteur 9 est réglé pour ne pas être excité par la lumière résiduelle réfléchie par la face 3.

On peut noter ici que les dispositions propres à l'invention qui seront exposées plus loin peuvent trouver application également dans le cas d'un éclairage du type dit "ombroscopie", c'est-à-dire que la source de rayonnement est disposée en regard de l'autre face inclinée 11 du prisme 2 de manière à éclairer la face 3 en lumière rasante. L'image reçue par le capteur 9 est alors une image "négative" (parties saillantes sombres, sillons clairs) .

L'apposition d'un doigt sur la face 3 peut laisser sur celle-ci des traces grasses qui ont été grossièrement figurées en 12 sur le prisme 2 de la figure 2A. Il peut se produire également que, dans certaines circonstances, la face 3 reçoive un rayonnement extérieur 13 (rayonnement parasite) d'une relative intensité (soleil, lampe à halogène, ...) qui est incliné par rapport à la face 3 et dirigé approximativement transversalement à la face inclinée 7 de sortie de l'élément optique 2. Ce rayonnement parasite met en évidence les traces grasses 12 et, du fait de son inclinaison, parvient jusqu'aux moyens capteurs 9.

Si les traces grasses 12 sont importantes, les moyens capteurs 9 reçoivent alors une image d'empreintes digitales comme illustré à la figure 2B (fausse image ou image "latente") que, du fait de son aspect relativement complet et de ses contrastes suffisants, ils traitent comme une image réelle obtenue à partir d'un doigt présent sur la face 3.

Une telle situation n'est pas acceptable en raison des erreurs auxquelles elle conduit et des risques de fraude auxquels elle peut donner lieu.

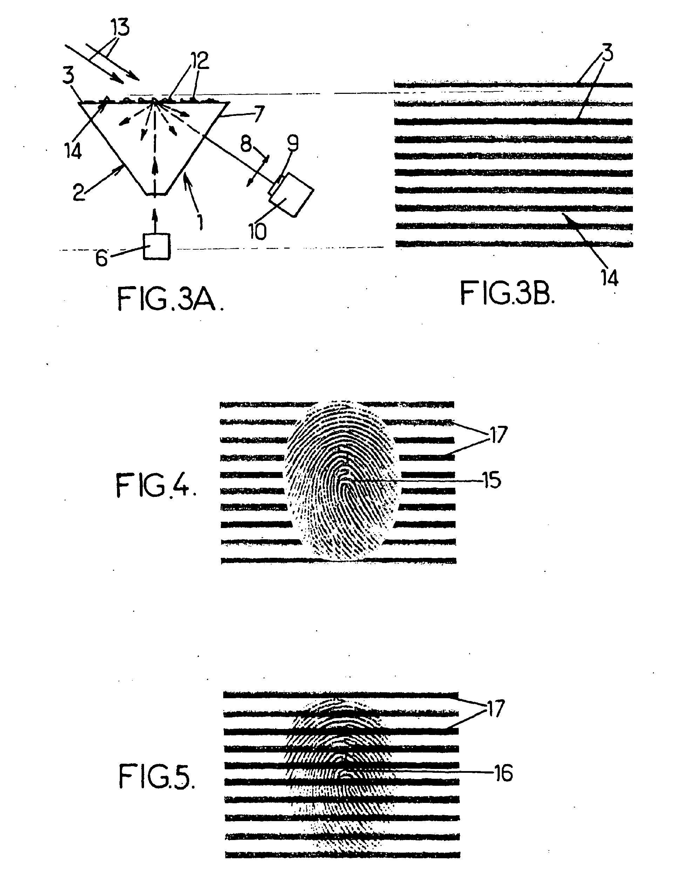

Conformément à l'invention, on prévoit, comme montré à la figure 3A, que la face 3 de l'élément optique 2 soit revêtue d'une couche mince 14 définissant un motif (lequel motif peut être quelconque et n'a aucune incidence sur la mise en oeuvre des dispositions de l'invention). La figure 3B montre une portion de la face 3 ainsi équipée. La couche 14 est constituée en un matériau qui est tel, en regard de l'air ambiant et du matériau constitutif de l'élément optique 2, que la couche 14 soit sensiblement transparente en présence du rayonnement émis par la source de rayonnement 6 lorsqu'un doigt 4 est apposé sur la face 3 et à être sensiblement moins transparente en présence d'un rayonnement parasite 13 en l'absence de doigt apposé sur ladite face 3.

Autrement dit, le matériau de la couche 14 possède un coefficient de transmission du rayonnement qui diffère légèrement de celui du matériau de l'élément optique 2 (en pratique il lui est légèrement inférieur, c'est-à-dire que la couche 14 est légèrement moins transparente que l'élément optique 2).

Dans ces conditions, le motif formé par la couche 14 est invisible en présence d'un rayonnement dirigé perpendiculairement à la face 3 et, dans les conditions de fonctionnement normales du dispositif (éclairage perpendiculaire à la face 3 et pas de rayonnement parasite), le motif formé par la couche 14 reste invisible pour le capteur 9 qui reçoit la seule image du doigt de la figure 1B.

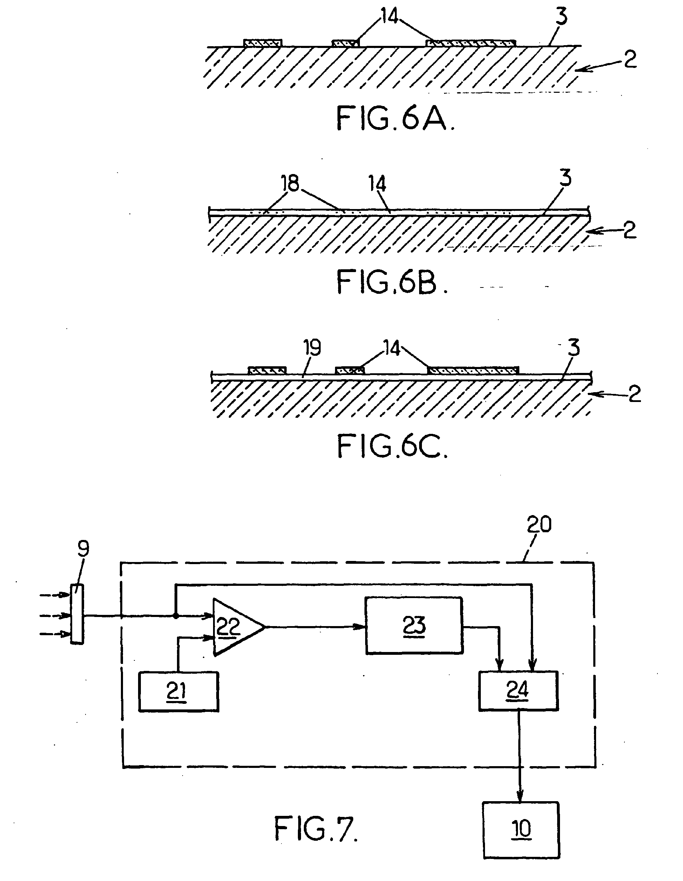

Par contre, le motif de la couche 14 devient apparent en présence d'une lumière parasite. L'image que peut recevoir le capteur 9 dans le cas où aucun doigt n'est apposé sur la face 3 et où la face 3 est propre (pas de traces grasses) est analogue à ce qui est illustré à la figure 3B : le capteur ne reçoit que l'image 17 du motif de la couche 14. La figure 4 montre l'image perçue par le capteur en présence d'un doigt apposé sur la face 3 : le capteur perçoit l'image 15 de l'empreinte digitale nette sans que le motif de la couche 14 soit visible à travers elle (l'image 17 du motif pouvant être visible seulement autour de l'image 15 si le champ de lisibilité est plus grand que le doigt, comme c'est le cas illustré à la figure 4). Enfin, en présence seulement de traces 12 sur la face 3 (aucun doigt n'est apposé sur celle-ci), le capteur 9 perçoit l'image latente 16 correspondant à ces traces superposée à l'image 17 du motif de la couche 14 visible à travers cette image latente comme illustré à la figure 5.

Il est alors aisé, du fait que la forme du motif de la couche 14 peut être tenue en mémoire, de discriminer des images reçues par le capteur 9 et correspondant respectivement aux figures 4 et 5 en recherchant la présence ou l'absence de l'image 17 du motif de la couche 14 dans l'image de l'empreinte. Ces moyens de discrimination peuvent notamment être inclus dans les moyens de traitement 10.

La couche 14 peut être constituée en tout matériau approprié pour engendrer le résultat recherché. Cette couche peut notamment être constituée en ITO (Indium-Tin Oxyd, oxyde indium-étain) couramment employé en optique et qui est susceptible d'être déposé en couche très mince. D'autres matériaux, tels que des polymères transparents, peuvent également être utilisés.

La couche 14 peut être déposée directement sur la face 3 de l'élément optique 2, à travers un masque, pour former le motif requis comme illustré à la figure 6A. La couche 14 est alors discontinue.

On peut aussi envisager, comme illustré à la figure 6B, de former une couche 14 continue et d'épaisseur sensiblement constante, présentant une transparence analogue à celle de l'élément optique 2 à l'exception d'emplacements localisés 18 répartis et configurés selon le motif prédéterminé.

Une autre solution intéressante consiste à constituer le motif prédéterminé sur un substrat volant apposable sur la face 3. La couche 14 de la figure 6B pourrait être constituée sous cette forme ; le dépôt sélectif de la couche 14 envisagé à la figure 6A pourrait quant à lui être formé sur un film 19 transparent continu, lui même appliqué sur la face 3 comme illustré à la figure 6C.

Un avantage très intéressant des dispositions conformes à l'invention réside dans le fait qu'il est possible d'équiper des matériels neufs, mais aussi qu'il est possible de modifier des matériels déjà en fonctionnement d'une façon relativement simple et peu onéreuse.

Un autre avantage des dispositions de l'invention réside dans le fait que ces dispositions sont indépendantes de la structure du dispositif (éclairage direct ou ombroscopie) et de la réalisation de l'élément optique (verre, matière synthétique) sous réserve d'une adaptation de l'indice de la couche 14 en fonction de celui de l'élément optique 2.

Encore un autre avantage des dispositions de l'invention réside dans le fait qu'elles n'affectent pas la structure du dispositif de capture ni son fonctionnement, mis à part les moyens de discrimination à mettre en oeuvre pour éliminer les images latentes.

Ces moyens de discrimination, désignés par 20 dans leur ensemble à la figure 7, peuvent être avantageusement intégrés en tant qu'étage de tête dans l'unité de traitement 10 précitée. Ils peuvent comprendre des moyens de mémorisation 21 pour tenir en mémoire les données de définition du motif formé par la couche 14, des moyens comparateurs 22 propres à comparer les données mémorisées en 21 avec les données délivrées par le capteur 9, des moyens de sélection 23 pour délivrer un premier signal (signal de blocage) si les moyens de comparaison identifient une image du motif superposé à une image d'empreintes digitales (cas de la figure 5) ou un second signal (signal de déblocage ou de validation) si les moyens de comparaison identifient une image d'empreintes digitales seule (cas de la figure 4). La sortie des moyens de sélection 23 est raccordée à une entrée d'une porte 24 dont une autre entrée reçoit le signal de sortie du capteur 9. La porte 24 est fermée sous la commande du premier signal et aucun signal n'est délivré par celle-ci (image latente) et elle est ouverte sous la commande du second signal et le signal provenant du capteur est délivré à l'unité de traitement 10 (image réelle). Les moyens comparateurs 22 et les moyens de sélection 23 définissent ainsi des moyens de détection propres à commander des moyens de discrimination réalisés sous forme de la porte 24.

## Revendications

1. Dispositif optique de capture biométrique par contact, comprenant :
un élément optique (2) dont une face (3) constitue au moins en partie une surface d'apposition d'un organe (4) dont on souhaite capter une caractéristique biométrique,
une source de rayonnement (6) associée audit élément optique (2) pour éclairer ladite face (3) de l'élément optique (2), et
des moyens capteurs (9) propres à recueillir du rayonnement provenant de ladite face (3) de l'élément optique (2),
**caractérisé en ce que** ladite face (3) de l'élément optique (2) est revêtue d'une couche mince (14) définissant un motif et constituée en un matériau tel, en relation avec le matériau constitutif de l'élément optique, que ladite couche (14) soit sensiblement transparente en présence du rayonnement émis par la source de rayonnement (6) lorsqu'un organe (4) est apposé sur ladite face (3) de l'élément optique (2) et à être sensiblement moins transparente en présence d'un rayonnement parasite extérieur (13) incliné par rapport à ladite face de l'élément optique,
ce grâce à quoi l'image reçue par les moyens capteurs peut être différenciée selon qu'il s'agit d'une image réelle ou d'une image latente.

2. Dispositif selon la revendication 1, **caractérisé en ce que** la couche (14) déposée sur la face (3) de l'élément optique (2) est déposée en surépaisseur selon ledit motif prédéterminé.

3. Dispositif selon la revendication 1, **caractérisé en ce que** la couche (14) déposée sur la face (3) de l'élément optique (2) est constituée avec un indice de transmission variable (en 18) selon ledit motif prédéterminé.

4. Dispositif selon l'une quelconque des revendications 1 à 3, **caractérisé en ce que** ladite couche (14) est déposée directement sur la face (3) de l'élément optique (2).

5. Dispositif selon l'une quelconque des revendications 1 à 3, **caractérisé en ce que** ladite couche (14) est formée sur un film (19) transparent continu et **en ce que** c'est ce film (19) qui est déposé sur la face (3) de l'élément optique (2).

6. Dispositif selon l'une quelconque des revendications 1 à 5, **caractérisé en ce que** l'élément optique (2) est un prisme dont la base constitue la susdite face (3).

7. Dispositif selon l'une quelconque des revendications 1 à 6, **caractérisé en ce que** le matériau constitutif de l'élément optique (2) est du verre.

8. Dispositif selon l'une quelconque des revendications 1 à 7, **caractérisé en ce que** le matériau constitutif de la couche est l'oxyde ITO.

9. Dispositif selon l'une quelconque des revendications 1 à 8, **caractérisé en ce qu'**il est agencé pour la capture d'empreintes digitales (5).

10. Installation de capture biométrique par contact, **caractérisée en ce qu'**elle comprend :
- au moins un dispositif optique (1) de capture biométrique par contact selon l'une quelconque des revendications 1 à 9 ;
- des moyens de mémorisation (21) pour tenir en mémoire le motif formé par la couche mince (14) ;
- des moyens de détection (22, 23) pour détecter dans une image reçue par les moyens capteurs (9), la présence de l'image dudit motif en superposition à une image d'empreintes digitales ; et
- des moyens de discrimination (24) pour rejeter, en tant qu'image latente, une image reçue par le capteur et formée de la superposition de l'image du motif et d'une image d'empreintes digitales.

## Claims

1. An optical device for biometric sensing by contact, the device comprising:
· an optical element (2) a face (3) of which constitutes at least in part a surface for apposition of a body part (4) from which it is desired to sense a biometric characteristic;
· a radiation source (6) associated with said optical element (2) to illuminate said face (3) of the optical element (2); and
sensor means (9) suitable for receiving the radiation coming from said face (3) of the optical element (2) ;
**characterized in that** said face (3) of the optical element (2) is coated with a thin layer (14) defining a pattern and made of a material such that, in association with the material constituting the optical element, said layer (14) is substantially transparent in the presence of the radiation emitted by the radiation source (6) when a body part (4) is apposed on said face (3) of the optical element (2) and is substantially less transparent in the presence of interfering external radiation (13) that is inclined relative to said face of the optical element,
whereby the image received by the sensor means can be distinguished as to whether it constitutes a real image or a latent image.

2. A device according to claim 1, **characterized in that** the layer (14) deposited on the face (3) of the optical element (2) is deposited as extra thickness in said predetermined pattern.

3. A device according to claim 1, **characterized in that** the layer (14) deposited on the face (3) of the optical element (2) is made with a transmission index that varies (at 18) according to said predetermined pattern.

4. A device according to any one of claims 1 to 3, **characterized in that** said layer (14) is deposited directly on the face (3) of the optical element (2).

5. A device according to any one of claims 1 to 3, **characterized in that** said layer (14) is formed on a continuous transparent film (19) and **in that** it is that film (19) that is deposited on the face (3) of the optical element (2).

6. A device according to any one of claims 1 to 5, **characterized in that** the optical element (2) is a prism the base of which constitutes said face (3).

7. A device according to any one of claims 1 to 6, **characterized in that** the material constituting the optical element (2) is glass.

8. A device according to any one of claims 1 to 7, **characterized in that** the material constituting the layer is ITO.

9. A device according to any one of claims 1 to 8, **characterized in that** it is arranged to sense fingerprints (5).

10. An installation for biometric sensing by contact, **characterized in that** it comprises:
· at least one optical device (1) for biometric sensing by contact in accordance with any one of claims 1 to 9;
· memory means (21) for storing the pattern formed by the thin layer (14);
· detector means (22, 23) for detecting, in an image received by the sensor means (9), the presence of the image of said pattern in superposition on a fingerprint image; and
discriminator means (24) for rejecting as a latent image an image received by the sensor that is formed by the image of the pattern superposed on a fingerprint image.

## Patentansprüche

1. Optische Vorrichtung zur biometrischen Erfassung durch Kontakt, mit:
einem optischen Element (2), dessen eine Seite (3) wenigstens zum Teil eine Fläche zur Auflage eines Organs (4) bildet, von dem eine biometrische Eigenschaft erfasst werden soll,
einer Strahlungsquelle (6), die dem optischen Element (2) zugeordnet ist, um diese Seite (3) des optischen Elements (2) zu beleuchten, und
Erfassungsmitteln (9), welche die von der Seite (3) des optischen Elements (2) ausgehende Strahlung erfassen,
**dadurch gekennzeichnet, dass** diese Seite (3) des optischen Elements (2) mit einer ein Muster bildenden dünnen Schicht (14) überzogen ist und in Verbindung mit dem das optische Element bildenden Material aus einem solchen Material gebildet ist, dass die Schicht (14) bei vorhandener, von der Strahlungsquelle (6) emittierter Strahlung im Wesentlichen lichtdurchlässig ist, wenn ein Organ (4) auf die Seite (3) des optischen Elements (2) gelegt wird, und bei vorhandener externer Störstrahlung (13), die bezüglich der Seite des optischen Elements schräg verläuft, im Wesentlich nur gering lichtdurchlässig ist,
wodurch das von den Erfassungsmitteln empfangene Bild differenziert werden kann, je nachdem ob es sich um ein reelles Bild oder ein latentes Bild handelt.

2. Vorrichtung nach Anspruch 1,
**dadurch gekennzeichnet, dass** die auf der Seite (3) des optischen Elements (2) aufgetragene Schicht (14) entsprechend dem vorbestimmten Muster verdickt aufgetragen ist.

3. Vorrichtung nach Anspruch 1,
**dadurch gekennzeichnet, dass** die auf der Seite (3) des optischen Elements (2) aufgetragene Schicht (14) entsprechend dem vorbestimmten Muster mit einem variablen Transmissionsgrad (18) gebildet ist.

4. Vorrichtung nach einem der Ansprüche 1 bis 3,
**dadurch gekennzeichnet, dass** die Schicht (14) direkt auf die Seite (3) des optischen Elements (2) aufgetragen ist.

5. Vorrichtung nach einem der Ansprüche 1 bis 3,
**dadurch gekennzeichnet, dass** die Schicht (14) auf einer kontinuierlichen lichtdurchlässigen Folie (19) gebildet ist und dass die Folie (19) auf die Seite (3) des optischen Elements aufgetragen wird.

6. Vorrichtung nach einem der Ansprüche 1 bis 5,
**dadurch gekennzeichnet, dass** das optische Element (2) ein Prisma ist, dessen Basis die oben genannte Seite (3) bildet.

7. Vorrichtung nach einem der Ansprüche 1 bis 6,
**dadurch gekennzeichnet, dass** das Material, welches das optische Element (2) bildet, Glas ist.

8. Vorrichtung nach einem der Ansprüche 1 bis 7,
**dadurch gekennzeichnet, dass** das Material, welches die Schicht bildet, Indiumzinnoxid ITO ist.

9. Vorrichtung nach einem der Ansprüche 1 bis 8,
**dadurch gekennzeichnet, dass** sie zum Erfassen von digitalen Fingerabdrücken (5) ausgebildet ist.

10. Anlage zur biometrischen Erfassung durch Kontakt, **dadurch gekennzeichnet, dass** sie umfasst:
- wenigstens eine optische Vorrichtung (1) zur biometrischen Erfassung nach einem der Ansprüche 1 bis 9;
- Speichermittel (21) zum Speichern des von der dünnen Schicht (14) gebildeten Musters;
- Detektionsmittel (22, 23), um in einem von den Erfassungsmitteln (9) empfangenen Bild durch Überlagerung mit einem digitalen Fingerabdruckbild festzustellen, ob das Bild des Musters vorhanden ist; und
- Unterscheidungsmittel (24), um ein vom Sensor empfangenes und durch Überlagerung des Musterbilds mit einem digitalen Fingerabdruckbild gebildetes Bild als latentes Bild zu verwerfen.
